# EUROPEAN PATENT APPLICATION

(11) **EP 4 686 772 A1**
(43) Date of publication of application: **04.02.2026**
(21) Application number: 24306315.3
(22) Date of filing: 02.08.2024
(51) Int. Cl.: C25B 1/04, C25B 15/08

(54) **DEVICES FOR PROTECTION AGAINST CORROSION OF METAL PARTS WITHIN ALKALINE ELECTROLYZERS**

(71) Applicant: TotalEnergies OneTech, 92400 Courbevoie (FR); Techlam SAS, 68700 Cernay (FR)
(72) Inventor: AYMÉ-PERROT, David, 92400 COURBEVOIE (FR); GABRIELLE, Brice, 75008 PARIS (FR); GUILLOTIN, Mathieu, 75008 PARIS (FR)
(74) Representative: Lavoix

(57) **Abstract**

The installation (10), comprises a piece of equipment delimiting an electrolyte storage or/and circulation volume (200), the piece of equipment comprising a metal wall (202) having an inner surface (208) facing the electrolyte storage or/and circulation volume (200).

The piece of equipment further comprises:
- a polymer adhesive protection layer (220) applied on the inner surface (208) of the metal wall (202) ;
- a polymeric liner (222) positioned between the polymer adhesive protection layer (220) and the electrolyte storage or/and circulation volume (200), the polymeric liner (222) having an electrolyte contact surface (232) delimiting the electrolyte storage or/and circulation volume (200).

## Description

The present invention concerns a water electrolysis installation comprising at least a piece of equipment delimiting an electrolyte storage or/and circulation volume, the piece of equipment comprising a metal wall having an inner surface facing the electrolyte storage or/and circulation volume.

The installation is intended to carry out water electrolysis, in particular alkaline water electrolysis, at a pressure greater than the atmospheric pressure, with low capital and operational expenditures.

Water electrolysis has been developed for decades. When water is subjected to an electrochemical driving force at least higher than 1.23 V at room temperature (298.15 K), the electrolysis reaction occurs, converting water molecules into dihydrogen and dioxygen.

The produced dihydrogen (H₂) and dioxygen (O₂) gas can be further utilized in various commercial and industrial applications.

The water electrolysis installation comprises an electrochemical device (the stack), to convert water into dihydrogen and dioxygen using an electrical current and a balance of plant (or "process unit").

The electrochemical device generally comprises stacks of several electrochemical cells. In each cell, dihydrogen is produced at a negative electrode (cathode) separated by a membrane from the positive electrode (anode) where dioxygen is produced.

In an alkaline electrolysis process, a lye containing for example about 30% potassium hydroxide is flown into cells of the electrochemical device while a direct current is passed between the electrodes of each cell.

The reactions occurring at the electrodes are:
The HER (Hydrogen Evolution Reaction) at the cathode: 2 H₂O(*l*) + 2e⁻ → H₂(*g*) + 2 OH⁻(*aq*) The OER (Oxygen Evolution Reaction) at the anode: 2 OH⁻(*aq*) → 1/2 O₂(*g*) + H₂O(*l*) + 2 e⁻

When the water electrolysis takes place in a stack, the production of mixtures of gas and electrolyte get out of the stack. The dihydrogen and dioxygen outlets of the stack are connected to gas separators to separate the respective gas and electrolyte. The dihydrogen is then generally purified by removing remaining water traces.

Downstream of the separators, two types of architectures are known in alkaline water electrolysis.

The first type of architecture comprises two separate recirculation loops of electrolyte, one connected to the anodic compartments of the electrolyzer stacks, the other one connected to the cathodic compartments of the electrolyzer stacks. This approach avoids a mixing of the gases dissolved in electrolyte coming from the anodic compartments and from the cathodic compartments.

In a second type of architecture, the recycled electrolytes are usually mixed together to balance the concentration gradients. The electrolyte concentration is thus balanced.

In known alkaline water electrolysis, most of the equipment of the installation is made of carbon steel or stainless steel, an alloy containing various metals, mainly iron.

Under the action of the electrolyte, which is strongly basic, the pieces of equipment made of steel undergo corrosion. This results in the release of ions which are not very soluble and are found essentially in the form of metal oxides.

These metal oxides aggregate in the form of fine particles, which are then transported in the electrolyte circulation circuit. The fine particles can in turn agglomerate with each other, generating sludges.

Despite the presence of magnetic and/or mechanical filters in the circulation circuit, the finest particles remain present. These particles can potentially agglomerate in certain areas that are favorable to their deposition.

The favored deposition areas include asperities on exposed metal walls (e.g. certain pipes or distribution channels). In a worst-case scenario, the deposition blocks the electrolyte passage, generating overheating and impacting flow rates.

Other favored deposition areas include pores of the electrodes. The deposition leads to blocking part of their active surface and thus limiting their faradic efficiency. The same can occur in pores of the separating membrane within the cells, which potentially limits ionic transport.

In addition, metal ions in solution (i.e. the residual soluble fraction), once present in the stack cells, are the site of parasitic reactions on the electrode surface, which can potentially impact long-term electrode efficiency through passivation.

These phenomena are exacerbated by the intermittent nature of the power supply when it comes from renewable energies such as wind power or solar energy. The water electrolysis installation undergoes shutdown phases required as soon as the power supply falls below a minimum acceptable safe threshold (i.e. "turndown ratio").

Ultimately, the electrolyte quality is highly degraded, necessitating frequent replacement, resulting in significant operational costs and loss of production.

The above-described situation particularly affects pressurized alkaline electrolyzers, where the impact of dissolved gases on steel corrosion is exacerbated. System pressure is typically 15 to 30 bar, but may reach 100 bar.

A potential solution to limit corrosion and thus, particles' formation and agglomeration in the electrolyte, would be coating all the metal equipment in direct contact with the electrolyte with a pure nickel deposit.

Such a solution would not be entirely satisfactory. Coating large surface areas with nickel in the water electrolysis installation would increase capital expenditures. Moreover, nickel' scarcity maybe at risk in the upcoming decades, due the world-wide ramp-up of all kinds of renewable energies (e.g. a wind turbine may contain up to 400 kg of nickel per MW), the cost of nickel could very drastically increase.

Therefore, a very cautious implementation of this metal shall be done in each and every mass-produced component.

Moreover, nickel exposed to alkaline media stabilizes as hydroxides on the surface. The material remains subject to electrolyte flows also containing dissolved gases, which are likely to affect its cohesion over time. The actual stability of this type of deposit is still difficult to assess.

One aim of the invention is thus providing a safe and reliable water electrolysis installation, in particular to carry out alkaline water electrolysis under pressure, the installation having reduced capital and operational expenditures.

To this aim, the subject matter of the invention is an installation of the above-mentioned type, characterized in that the piece of equipment further comprises:
- a polymer adhesive protection layer applied on the inner surface of the metal wall;
- a polymeric liner positioned between the polymer adhesive protection layer and the electrolyte storage or/and circulation volume, the polymeric liner having an electrolyte contact surface delimiting the electrolyte storage or/and circulation volume.

The installation according to the invention may comprise one or more of the following feature(s) taken solely, or according to any technical feasible combination:
- the polymeric liner has a thickness greater than the polymer adhesive protection layer;
- the polymer adhesive protection layer is bound to the inner surface of the metal wall chemically , mechanically or a combination of both;
- the polymer adhesive protection layer comprises a polymer chosen from epoxy resin, acrylic or acrylate resin, polyurethane, polyester, vinylic resin, phenolic resin and mixtures thereof, or a polymer which is the same as the polymer of the polymeric liner;
- the polymeric liner comprises a polymer chosen among thermoplastic polymers, elastomers and mixtures thereof;
- the polymeric liner comprises a polymer chosen among:
   - a thermoplastic polymer chosen among fluorinated polymers, polysulfones, polyphenylene sulfide (PPS), polyether ether ketone (PEEK), copolymers thereof, and/or mixtures thereof;
   - an elastomer chosen among FKM or FFKM as defined in standard ASTM D1418-22, tetrafluoro ethylene/propylene rubbers (FEPM) and mixtures thereof;
   - and mixtures thereof;
- an outer surface of the polymeric liner is bound to an inner surface of the polymer adhesive protection layer;
- the bonding between the outer surface of the polymeric liner and the inner surface of the polymer adhesive protection layer is obtained at least partly by surface treatment of at least one the outer surface of the polymeric liner and of the inner surface of the polymer adhesive protection layer, the surface treatment advantageously comprising at least one of a mechanical etching, such as abrasion, a chemical etching, and a plasma treatment;
- the piece of equipment further comprises at least an intermediate binding layer connecting an outer surface of the polymeric liner to an inner surface of the polymer adhesive protection layer;
- the at least one intermediate binding layer comprises a polymer chosen from epoxy resin, acrylic or acrylate resin, polyurethane, polyester, vinylic resin, phenolic resin, silane based resins and mixtures thereof, or a polymer which is the same as the polymer of the polymeric liner;
- the polymeric liner and the polymer adhesive protection layer are unbounded, the polymeric liner and the polymer adhesive protection layer preferably defining between them a drainage structure;
- the drainage structure comprises at least one channel, being defined in at least one of the polymeric liner, the polymer adhesive protection layer the drainage structure optionally comprising at least one collection zone, the at least one channel emerging in the collection zone, the drainage structure comprising at least a through passage defined through the metal wall, the at least one through passage being fluidly connected to the collection zone;
- the metal of the metal wall is steel, preferably stainless steel or carbon steel, most preferably carbon steel, in particular carbon steel grades P265GH, P355GH or P355NH;
- it comprises:
- at least an electrolyzer stack device comprising at least a cell having an anodic compartment containing an anode, a cathodic compartment containing a cathode and a separator separating the anodic compartment and the cathodic compartment;
- an electric current supply to the anode and the cathode of the or each cell to electrolyze water within each cell, and produce dioxygen in the anodic compartment and dihydrogen in the cathodic compartment;
- a dioxygen containing electrolyte recovery pipe to recover a mixture of electrolyte and dioxygen from the or each anodic compartment and a dioxygen separator to separate the mixture of electrolyte and dioxygen and to obtain an dioxygen stream and a first electrolyte stream;
- a dihydrogen containing electrolyte recovery pipe to recover a mixture of electrolyte and dihydrogen from the or each cathodic compartment and a dihydrogen separator to separate the mixture of electrolyte and dihydrogen and to obtain a dihydrogen stream and a second electrolyte stream;
- at least a recycle pipe recirculating the first electrolyte stream and the second electrolyte stream to form at least part of the electrolyte containing water introduced in the electrolyzer stack device, the piece of equipment being at least one of a separator, a tank, a pipe, a pipe fitting, a pipe bend, a distributor, a manifold, a thermal exchanger, a stack casing, a valve, a pump, an instrument, defining the electrolyte storage or/and circulation volume;
- the electrolyte storage or/and circulation volume contains an electrolyte, in particular an alkaline electrolyte, preferably an electrolyte containing an alkali metal hydroxide such as potassium hydroxide;

The invention also concerns a use of a piece of equipment to store and/or transport electrolyte in a water electrolysis installation, the piece of equipment delimiting an electrolyte storage or/and circulation volume, and comprising a metal wall having an inner surface facing the electrolyte storage or/and circulation volume, the piece of equipment further comprising:
- a polymer adhesive protection layer applied on the inner surface of the metal wall;
- a polymeric liner positioned between the polymer adhesive protection layer and the electrolyte storage or/and circulation volume, the polymeric liner having an electrolyte contact surface delimiting the electrolyte storage or/and circulation volume.

The use according to the invention may comprise one or more of the following feature(s) taken solely, or according to any technical feasible combination:
- the electrolyte is pressurized at an electrolyte pressure above the atmospheric pressure in the electrolyte storage or/and circulation volume, the electrolyte pressure being advantageously greater than 10 bara and generally comprised between 15 bara and 120 bara.

The invention will be better understood, based on the following description, given solely as an example, and made in reference to the appended drawings, in which:
- [Fig.1] Figure 1 is a schematic representation of a water electrolysis installation to carry out a first water electrolysis process according to the invention ;
- [Fig.2] Figure 2 is a schematic representation of details of the installation of figure 1 illustrating in particular an electrolyzer stack with an electrolyte distributor ;
- [Fig.3] Figure 3 is a partial cross sectional view of a first piece of equipment in the installation of figure 1, with a metal wall to which are attached a polymer adhesive protection layer, a polymeric liner and an intermediate binding layer;
- [Fig.4] Figure 4 is a partial cross sectional view of a second piece of equipment in the installation of figure 1, with a metal wall to which are attached a polymer adhesive protection layer and a polymeric liner without intermediate binding layer;
- [Fig.5] Figure 5 is a partial cross sectional view of a third piece of equipment in the installation of figure 1, with a metal wall to which is attached a polymer adhesive protection layer, a polymeric liner being positioned between the polymer adhesive protection layer and an electrolyte storage or/and circulation volume.

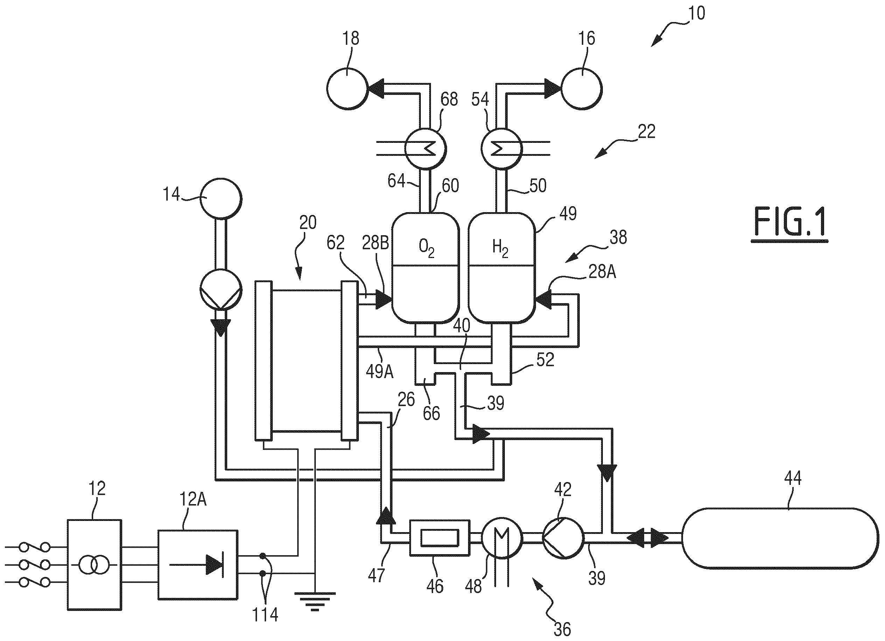

A water electrolysis installation 10 according to the invention is schematically shown in figure 1.

As it will be described below, the installation 10 comprises at least a piece of equipment which is protected against corrosion using at least a polymer adhesive protection layer applied on a surface of a metal wall and a polymeric liner positioned between the polymer adhesive protection layer and an electrolyte storage or/and circulation volume.

The installation 10 is connected to an electric source 12, advantageously via a rectifier 12A, and to a water source 14, for the production of dihydrogen 16 and dioxygen 18.

In the embodiment of figure 1, the water electrolysis installation 10 is carrying out alkaline water electrolysis using an electrolyte based on a lye.

The electrolyte is typically an alkaline electrolyte, for example a alkali metal hydroxide solution, in particular a sodium hydroxide (NaOH), lithium hydroxide (LiOH), cesium hydroxide (CsOH) or potassium hydroxide (KOH) solution, preferably a NaOH or KOH solution, most preferably a KOH solution, with a concentration of alkali metal hydroxide preferably greater than 0.1 mol per liter of electrolyte, in particular greater than 1 mol per liter, notably between 6 mol per liter and 8 mol per liter.

The electrolyte may comprise at least an additive such as vanadium oxide (V₂O₅) for example with a concentration greater than 1 g per liter.

The electric source 12 is for example a renewable energy source, such as a solar farm, or a wind farm, or is a battery system, a power grid or any device supplying electricity.

The installation 10 comprises at least an electrochemical stack device 20, where the electrochemical reactions take place, and a balance of plant 22 connected to the electrochemical stack device 20. The balance of plant 22 comprises various fluid handling components, including pipes, reservoirs, tanks, separators which will be described below.

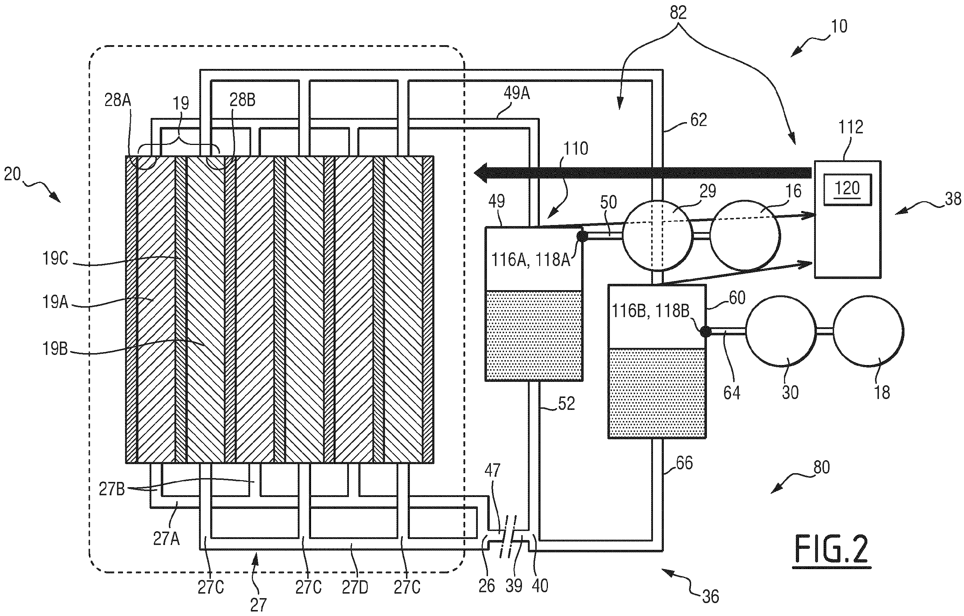

The balance of plant 22 is configured to convey at least an incoming electrolyte 26 (see figure 2) to an inlet of the electrochemical stack device 20 and to recover outcoming fluids 28A, 28B from outlets of the electrochemical stack device 20.

The electrochemical stack device 20 comprises at least one electrochemical cell 19, a frame receiving the or each electrochemical cell 19 and an outer enclosure containing the frames (not shown).

Each cell 19 comprises at least two electrodes, respectively an anode and a cathode, immersed in an electrolyte. The two electrodes are separated by at least one or more separator 19C. The cells 19 are for example arranged in rows defining a stack.

The cathode is contained in a cathodic compartment 19A where the dihydrogen is produced. The anode is contained in an anodic compartment 19B where the dioxygen is produced.

Water electrolysis takes place by providing electrolyte in each anodic compartment 19B of each cell 19 (the electrolyte being then referred to as "anolyte") and in each cathodic compartment 19A of each cell 19 (the electrolyte being then referred to as "catholyte") and by providing an electric current from the source 12 between the cathode and the anode of each cell 19.

The separator 19C comprises at least a membrane that ensures the ionic conductivity of the cell while limiting fluids present in each compartment 19A, 19B, namely dihydrogen and dioxygen produced at each electrode, to contact each other. The separator 19C is an electron insulator to prevent short-circuits.

In the case of alkaline electrolysis, the membrane is generally a composite material made of a polymer material and of an inorganic material, typically a polyphenylene sulfide (PPS) fabric coupled with a zirconia oxide ceramic, or asbestos, or a polymer membrane.

Each cell 19 receives a supply of electric current from the electric source 12 through the rectifier 12A and a current distributor (not shown). It also receives the electrolyte through a fluid distributor 27.

In the example of figure 2, the fluid distributor 27 comprises an upstream common cathodic feed 27A, common to several cells 19 and several individual downstream cathodic feeds 27B, each connecting the upstream common cathodic feed 27A to an individual cathodic compartment 19A of a cell 19.

The fluid distributor 27 also comprises an upstream common anodic feed 27D, common to several cells 19 and several individual downstream anodic feeds 27C, each connecting the upstream common anodic feed 27D to an individual anodic compartment 19B of a cell 19.

In the example of figure 2, the upstream feeds 27A, 27D are configured to transport a mixed electrolyte, which is distributed in both the anodic compartments 19B and the cathodic compartments 19A of each cell 19.

In a variant (not shown) the upstream common anodic feed 27D and the upstream common cathode feed 27A receive exclusively electrolyte recycled respectively from the outcoming fluid 28A produced in the cathodic compartments 19A and from the outcoming fluid 28B produced in the anodic compartments 19B.

Outcoming fluids 28A, 28B, here respectively dihydrogen containing electrolyte and dioxygen containing electrolyte are gathered respectively from the cathodic compartments 19A and from the anodic compartment 19B of the cells 19 and are recovered outside the enclosure.

The enclosure thus defines at least an incoming electrolyte 26 supply inlet and at least two outcoming fluid 28A, 28B recovery outlets, through which it is connected to the balance of plant 22.

The balance of plant 22 imports water from the water source 14 to the water electrolysis installation 10 to refresh and supply electrolyte to the electrochemical stack device 20 and exports dihydrogen 16 and dioxygen 18 produced in the electrochemical stack device 20 outside of the water electrolysis installation 10.

Advantageously, the balance of plant 22 also comprises a downstream dihydrogen purification stage 29 and if needed, a dioxygen purification stage 30 which are visible in figure 2.

The balance of plant 22 comprises an upstream circuit 36 to prepare and feed incoming electrolyte 26 to the electrochemical stack device 20, and a downstream circuit 38 to recover and treat outcoming fluids 28A, 28B produced in the electrochemical stack device 20 and recycle electrolyte to the upstream circuit 36.

In the example shown in figure 2, the upstream circuit 36 comprises an upstream recycled electrolyte supply pipe 39 connected to the fresh water source 14, and a tapping 40 connected to the recycle electrolyte supply pipe 39 to receive the related recycled electrolyte from the downstream circuit 38.

In a variant (not shown), the water electrolysis installation 10 comprises separate circuits to recycle the electrolyte respectively recovered in the dihydrogen separator 49 and in the dioxygen separator 60.

The water electrolysis installation 10 is thus without a mixing zone between the electrolytes recovered in each separator 49, 60.

Rather, the first electrolyte recycle pipe 52 is directly connected to the upstream cathodic feed 27A and the second recycle pipe 66 is directly connected to the upstream anodic feed 27D.

The upstream circuit 36 further comprises an electrolyte tank 44 in which electrolyte is prepared from water supplied by the water source and stored, and a downstream electrolyte supply pipe 47 connecting the electrolyte tank 44 to the incoming electrolyte 26 inlet of the electrochemical stack device 20.

The upstream circuit 36 here comprises a pump 42 and advantageously, an electrolyte filter 46, in particular a lye filter, interposed on the downstream electrolyte supply pipe 47 between the electrolyte tank 44 and the incoming electrolyte inlet of the electrochemical stack device 20. It advantageously comprises a thermal exchanger 48, for example positioned between the pump 42 and the filter 46.

The electrolyte tank 44 is a tank containing a concentrated electrolyte solution.

The electrolyte filter 46 is configured to filter the electrolyte to remove solids, such as lye precipitates, from the electrolyte. The filter is for example a Y-filter mounted with a sieve with a pore size less than 10 micrometers.

The downstream circuit 38 connects the outcoming fluids 28A, 28B outlets of the electrochemical stack device 20 to a recovery of dihydrogen 16 and dioxygen 18 in gaseous state.

It comprises a dihydrogen separator 49 and a dihydrogen containing outcoming fluid recovery pipe 49A connecting the outcoming fluid 28A outlet of the electrochemical stack device 20 to the dihydrogen separator 49.

The dihydrogen separator 49 is a gas/liquid separator configured to separate the outcoming fluid 28A into gaseous dihydrogen 16 and electrolyte to be recycled.

The downstream circuit 38 hence comprises a dihydrogen recovery pipe 50 and a first electrolyte recycle pipe 52 tapped from the dihydrogen separator 49.

The dihydrogen recovery pipe 50 is for example equipped with a thermal exchanger 54.

The first recycle electrolyte pipe 52 is connected to the recycled electrolyte supply pipe 39.

The downstream circuit 38 also comprises a dioxygen separator 60 and a dioxygen containing outcoming fluid recovery pipe 62 connecting the outcoming fluid 28B outlet of the electrochemical stack device 20 to the dioxygen separator 60.

The dioxygen separator 60 is a gas/liquid separator configured to separate the outcoming fluid 28B into gaseous dioxygen 18 and electrolyte to be recycled.

The downstream circuit 38 hence comprises a dioxygen recovery pipe 64 and a second electrolyte recycle pipe 66 tapped from the dioxygen separator 60.

The dioxygen recovery pipe 64 is for example equipped with a thermal exchanger 68.

In the example of figures 1 and 2, the first electrolyte recycle pipe 52 and the second electrolyte recycle pipe 66 merge at the tapping 40, defining a mixing region in which a mixed electrolyte is formed. Optionally, as mentioned above, the first electrolyte recycle pipe 52 and the second electrolyte recycle pipe 66 can stay fully separate.

As shown in figure 2, the installation 10 comprises a sensing and control system 82 configured to operate the electrochemical stack device 20.

The sensing and control system 82 comprises a set of sensors 110, and at least one controller unit 112 connected to the set of sensors 110 to control the operation of the water electrolysis installation 10.

The set of sensors 110 in particular comprises a current sensor 114 (see figure 1) configured to measure the current provided to the electrochemical stack device 20 by the electric source 12.

It further comprises gas sensors comprising at least one dioxygen sensor 116A and one dihydrogen sensor 118A to define the dioxygen to dihydrogen ratio in the outcoming fluid 28A recovered from the cathodic compartments 19A in the dihydrogen containing outcoming fluid recovery pipe 49A, and at least one dihydrogen sensor 116B and one dioxygen sensor 118B to define the dihydrogen to dioxygen ratio in the outcoming fluid 28B in the dioxygen containing recovery pipe 62.

The sensors 116A, 118A; 116B, 118B are respectively located at the outlet of the dihydrogen separator 49, and at the outlet of the dioxygen separator 60.

The controller unit 112 comprises at least a first controller 120 to control the current or current density supply to the electrochemical stack device 20 using data measured by the current sensor 114, and/or gas ratio data measured from data measured by gas sensors 116A, 118A; 116B, 118B.

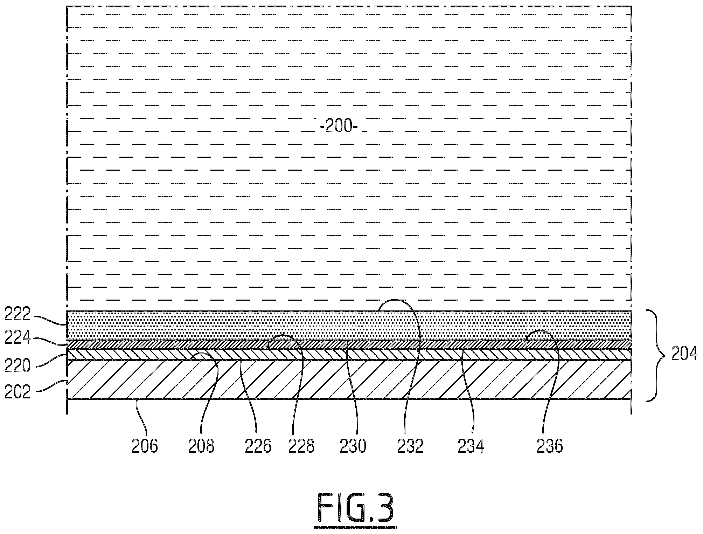

Several pieces of equipment in the installation 10 thus define an electrolyte storage or/and circulation volume 200 (see figure 3) in which electrolyte is stored or/and is transported.

These pieces of equipment include pieces of equipment located within the electrochemical stack device 20.

This includes for example stack casing delimiting the anodic compartments 19B and the cathodic compartments 19A of at least a cell 19 or/and tubing from the distributor 27 including individual downstream cathodic feeds 27B and individual downstream anodic feeds 27C.

The pieces of equipment defining an electrolyte storage or/and circulation volume 200 include pieces of equipment located within the balance of plant 22. This includes separator(s) such as separators 49, 60, tank(s) including tank 44, thermal exchanger(s) such as thermal exchangers 46, 54, 68, tubing such as the upstream common cathodic feed 27A, the upstream anodic feed 27D, pipes such as pipes 39, 47, 49A, 50, 52, 62, 64, 66, and all these equipment related fittings and bends, such as pipe fittings and pipe bends. This also includes valves (not shown), pump(s) including pump 42, instruments including sensor(s) of the set of sensors 110, and all these equipment related fittings.

In reference to figure 3, according to the invention, at least one piece of equipment, preferably several pieces of equipment, and possibly all pieces of equipment defining an electrolyte storage or/and circulation volume 200 comprise a metal wall 202 and a polymeric protective structure 204 positioned between the metal wall 202 and the electrolyte storage or/and circulation volume 200.

The polymeric protective structure 204 contains at least two polymer layers, including a polymer adhesive protection layer 220 applied on the inner surface 208 of the metal wall 202 and a polymeric liner 222 positioned between the polymer adhesive protection layer 220 and the electrolyte storage or/and circulation volume 200.

In the following, the term "inner" generally means closer or/and facing the electrolyte storage or/and circulation volume 200 and the term "outer" generally means further away from or/and opposite the electrolyte storage or/and circulation volume 200.

The metal wall 202 is for example made of steel. Steel is particularly subject to corrosion in the presence of the electrolyte. The steel may be stainless steel or carbon steel, The presence of the polymeric protective structure 204 as described below makes it possible to use carbon steel, which is advantageously less expensive than stainless steel.

A carbon steel is generally a steel having a carbon content greater than 0.05 percent by weight, typically from about 0.05 up to 2.1 percent by weight. Examples of grades of carbon steel include P265GH, P355GH, P355NH, etc.

The metal surface 208 may be mechanically and/or chemically etched before applying the polymer adhesive protection layer 220 in order to improve adhesive strength thereof. Abrading or plasma treating are preferred etching treatment.

The minimum thickness of the metal wall 202, is generally dependent on the design pressure and the considered diameters/sections, and is usually greater than 1 mm.

The minimum thickness is taken as the minimal distance between an outer surface 206 of the metal wall 202 opposite to the electrolyte storage or/and circulation volume 200 and an inner surface 208 of the metal wall 202 facing the electrolyte storage or/and circulation volume 200.

In the example of figure 3, in addition to the polymer adhesive protection layer 220 and to polymeric liner 222, the polymeric protective structure 204 also comprises at least an intermediate binding layer 224 connecting the polymeric liner 220 to the polymer adhesive protection layer 210.

The polymer adhesive protection layer 220 has a minimum thickness greater than 5 µm, preferably greater than 50 µm and generally comprised between 100 µm and 1000 µm.

The minimum thickness is taken as the minimal distance between an outer surface 226 of the polymer adhesive protection layer 220 opposite to the electrolyte storage or/and circulation volume 200 and an inner surface 228 of the polymer adhesive protection layer 220 facing the electrolyte storage or/and circulation volume 200.

The polymer adhesive protection layer 220 is bound to the inner surface 208 of the metal wall 202 chemically, mechanically or a combination of both.

Chemical bonding preferably includes covalent bond or/and polar bond and/or hydrogen bond between the polymer of the polymer adhesive protection layer 220 and the metal of the metal wall 202, preferably covalent bond or/and polar bond, most preferably covalent bond.

Mechanical bonding for example includes constraining the polymer adhesive protection layer 220 on the inner surface 208 of the metal wall 202. The constraining can be obtained by shrinking the polymer adhesive protection layer 220 on the inner surface 208, for example by deforming the polymer adhesive protection layer 220 on the inner surface via a heating or cooling effect, or/and by film formation on the inner surface 208, for example by depositing polymer dissolved in solvent and evaporating the solvent.

The polymer adhesive protection layer 220 is preferably fully bonded to the inner surface 208, in particular there is no gaseous gaps between the inner surface 208 and the outer surface 226.

Generally, the adhesive strength of the polymer adhesive protection layer 220 to the inner surface 208 of the metal wall 202, and in particular to steel, is at least 5MPa as defined in Standard ISO 4624, according to the pull-off test for adhesion standard, based on the following control protocol.

A production test panel is prepared for each piece of equipment on which the polymer adhesive protection layer 220 is coated or at least for each batch of polymer adhesive protection layer 220 defined by pieces of equipment treated at same time, with same product/process,

Such a test panel is made advantageously from carbon steel plates and has a surface area of at least 200 mm x 200 mm and a thickness as mentioned above.

The test panels are blast-cleaned and advantageously coated at the same time and manner than the piece(s) of equipment. They are labelled in such a way as to permanently identify the test sample and the associated piece(s) of equipment.

Three adhesion tests are performed on each production test panel when the coated piece of equipment is completely dry and fully cured, using a hydraulic tensile pull-off adhesion tester.

The three adhesion tests shall meet or exceed the minimum value listed hereabove

In the event that any single adhesion value is found below those values, three further tests are practiced on the same test panel. If any of these will fail, the piece(s) of equipment should be re-blasted and re-coated.

The polymer adhesive protection layer 220 generally comprises a polymer chosen from epoxy resin, acrylic or acrylate resin, polyurethane, polyester, vinylic resin, phenolic resin and mixtures thereof. Cyanoacrylates are preferred acrylate resins.

Generally, the polymer adhesive protection layer 220 comprises at least 75% by weight, preferably at least 80% by weight, most preferably at least 90% by weight of a polymer as defined above or of mixtures thereof.

Alternatively, the polymer adhesive protection layer 220 may comprise the same polymer (or the same mixture of polymers) as the polymeric liner 222.

The polymer adhesive protection layer 220 is then typically obtained by applying a solution comprising said polymer (or said mixture of polymers) and a solvent on the inner surface 208 of the metal wall 202, then by evaporating the solvent of the solution, whereby the polymer adhesive protection layer 220 is formed. Good adhesion is thus obtained between the metal wall 202 and the polymer adhesive protection layer 220.

Usually, the polymeric liner 222 does not adhere well to the metal wall 202 when it is directly applied on the inner surface 208 of the metal wall 202. The polymer adhesive protection layer 220 advantageously helps compatibilizing the polymer liner 222 and the metal wall 202.

The polymer adhesive protection layer 220 is preferably electrically insulating. Advantageously, the volume resistivity thereof is at least 1 x 10¹⁰ Ω·m and higher, or the surface resistivity is 1 x 10¹¹ Ω/sq or higher, wherein the volume resistivity and surface resistivity are as measured according to ISO 14309:2019.

The polymeric liner 222 advantageously has a thickness greater, typically three times greater, preferably five times greater, most preferably ten times greater, than the polymer adhesive protection layer 220.

The polymeric liner 222 has a minimum thickness greater than 100 µm, preferably greater than 500 µm and generally comprised between 1 mm and 10 mm.

The minimum thickness is taken as the minimal distance between an outer surface 230 of the polymeric liner 222 opposite to the electrolyte storage or/and circulation volume 200 and an inner surface 232 of the polymeric liner 222 facing the electrolyte storage or/and circulation volume 200.

The inner surface 232 is an electrolyte contact surface delimiting the electrolyte storage or/and circulation volume 200.

The polymeric liner 222 is impervious to the electrolyte. Advantageously, the moisture permeability coefficient through the polymeric liner 222 at 25 °C and 1 atm is smaller than 0.1 g.mm.m⁻².d⁻¹, preferably smaller than 0.01 g.mm.m⁻².d⁻¹. The water vapor permeability is measured according to the ASTM E96 standard.

The gas diffusion through the polymeric liner 222 is minimized, in particular the dioxygen and dihydrogen diffusion.

Advantageously, the gas permeation coefficient through the polymeric liner 222 is greater than the gas permeation coefficient through the polymer adhesive protection layer 220 at the same temperature and pressure.

Advantageously, on the whole working range of temperatures, and advantageously at 25°C, :
- the H₂ permeability of the polymeric liner 222 as measured according to ASTM D1434 Méthode M is generally smaller than 20 barrer (67.0 x 10¹⁶ (mol.m)/(m².s.Pa)) and is comprised notably from 10 barrer (33.5 x 10¹⁶ (mol.m)/(m².s.Pa)) to 15 barrer, (50.25 x 10¹⁶ (mol.m)/(m².s.Pa)) and/or
- the O₂ permeability thereof as measured according to ASTM D1434 Méthode M is generally smaller than 5 barrer (16.75 x 10¹⁶ (mol.m)/(m².s.Pa)) and is comprised notably from 1 Barrer (3.35 x 10¹⁶ (mol.m)/(m².s.Pa)) to 2 barrer (6.70 x 10¹⁶ (mol.m)/(m².s.Pa)).

The polymeric liner 222 advantageously prevents the electrolyte from getting into contact with the inner surface 208 of the metal wall 202. It also advantageously restrains hydrogen from getting into contact with the inner surface 208 of the metal wall 202. It further avoids static electricity on the inner surface 208 of the metal wall 202, thus restraining some electrical shunts.

The polymeric liner 222 is preferably electrically insulating.

Advantageously, at 25°C, the volume resistivity thereof is 1 x 10⁸ Ω·m, preferably at least 1 x 10¹⁰ Ω·m and higher, preferably greater than 1 x 10¹¹ Ω·m, wherein the volume resistivity is measured according to ASTM D257.

The polymeric liner 222 preferably has a high mechanical strength. Advantageously, the tensile modulus of the polymeric liner 222 at 25°C is greater than 1800 MPa, preferably comprised between 2000 MPa and 3000 MPa. The Tensile modulus is measured according to the standard ASTM D638.

Such mechanical strength maintains the integrity of the polymeric liner 222, in particular when electrolyte decompression occurs, e.g. in the event of an emergency shutdown or intermittent power supply and underlying electrolyzer operability.

Preferably, the polymer of the polymeric liner 222 is chosen among thermoplastic polymers, elastomers and mixtures thereof.

Preferred thermoplastic polymers for the polymeric liner 222 are fluorinated polymers, polysulfones (PSU, PPSU, etc.), polyphenylene sulfide (PPS), polyether ether ketone (PEEK), copolymers thereof, and/or mixtures thereof.

Preferred thermoplastic fluorinated polymers are polyvinylidene fluoride (PVDF), perfluoropolyether (PFPE), polytetrafluoroethylene (PTFE), ethylene chlorotrifluoroethylene (ECTFE) and mixtures thereof.

Preferred polysulfones are polysuphone (PSU), polyethersulfone (PES), polyarylsulfone (PAS) such as polyphenylsulfone (PPSU), and mixtures thereof.

Preferred elastomers are FKM or FFKM as defined in standard ASTM D1418-22, tetrafluoro ethylene/propylene rubbers (FEPM) and mixtures thereof.

Generally, the polymeric liner 222 comprises at least 75% by weight, preferably at least 80% by weight, most preferably at least 90% by weight of a polymer as defined above or of mixtures thereof.

The thickness of the polymeric liner 222 is preferably at least 100 µm, most preferably at least 500 µm.

The polymeric liner 222 may be applied by any method, for example by blowing a polymeric coating or by rotational molding.

The intermediate bonding layer 224 advantageously has a thickness smaller, typically three times smaller, preferably five times smaller, most preferably ten times smaller, than the polymeric liner 222.

The intermediate bonding layer 224 has a minimum thickness greater than 5 µm, preferably greater than 50 µm.

The minimum thickness is taken as the minimal distance between an outer surface 234 of the intermediate binding layer 224 opposite to the electrolyte storage or/and circulation volume 200 and an inner surface 236 of the intermediate binding layer 224 facing the electrolyte storage or/and circulation volume 200.

The inner surface 236 of the intermediate binding layer 224 is bound to the outer surface 230 of the polymeric liner 222. The polymeric liner 222 is preferably fully bonded to the intermediate binding layer 224, in particular there is no gaseous gaps between the inner surface 236 and the outer surface 230.

The outer surface 234 of the intermediate binding layer 224 is bound to the inner surface 228 of the polymer adhesive protection layer 220. The intermediate binding layer 224 is preferably fully bonded to the polymer adhesive protection layer 220, in particular there is no gaseous gaps between the inner surface 228 and the outer surface 234.

The intermediate binding layer 224 generally comprises a polymer chosen from epoxy resin, acrylic or acrylate resin, polyurethane, polyester, vinylic resin, phenolic resin, silane based resins and mixtures thereof. Cyanoacrylates are preferred acrylate resins.

Generally, the intermediate bonding layer 224 comprises at least 75% by weight, preferably at least 80% by weight, most preferably at least 90% by weight of a polymer as defined above or of mixtures thereof.

Alternatively, the intermediate binding layer 224 may comprise the same polymer (or the same mixture of polymers) as the polymeric liner 222. The intermediate binding layer 224 is then typically obtained by applying a solution comprising said polymer (or said mixture of polymers) and a solvent on the surface of the polymer adhesive protection layer 220.

The metal wall 202 / polymer adhesive protection layer 220 / intermediate binding layer 224 / polymeric liner 222 four-layer structure is typically obtained by applying a polymer adhesive protection layer 220 on the inner surface 208 of the metal wall 202, then applying a solution comprising a polymer (or mixture of polymers) and a solvent on the polymer adhesive protection layer 220, and then applying a polymeric liner 222 based on the same polymer(s) on said solution, then evaporating the solvent of the solution, whereby the intermediate binding layer 224 is formed and the four-layer structure is obtained.

Good adhesion is thus achieved between the metal wall 202, the polymer adhesive protection layer 220, the intermediate binding layer 224 and the polymeric liner 222.

The binding between the intermediate binding layer 224 and the polymeric liner 222 and/or between the polymer adhesive protection layer 220 is preferably enhanced by a prior surface treatment including for example abrasion, chemical etching or/and plasma treatment of at least one of the inner surfaces 228, 236 and outer surfaces 230, 234.

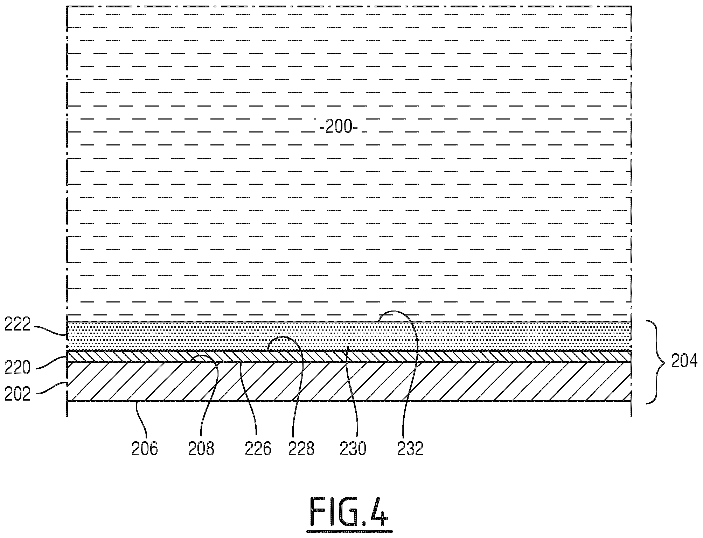

In a variant, shown in figure 4, the polymeric protective structure 204 is without an intermediate binding layer 224. The polymer adhesive protection layer 220 and the polymeric liner 222 are then preferably adjacent without any polymeric layer between them.

The outer surface 230 of the polymeric liner 222 is directly bound to the inner surface 228 of the polymer adhesive protection layer 220. Otherwise said, the polymeric liner 222 sheathed the polymer adhesive protection layer 220. The polymeric liner 222 is preferably fully bonded to the polymer adhesive protection layer 220, in particular there is no gaseous gaps between the inner surface 228 and the outer surface 230.

The binding between the polymeric liner 222 and the polymer adhesive protection layer 220 is preferably enhanced by a prior surface treatment including for example abrasion, chemical etching or/and plasma treatment of at least one of the inner surface 228 and outer surfaces 230.

When adhesion between the polymer adhesive protection layer 220 and the polymeric liner 222 is sought, the metal wall 202 / polymer adhesive protection layer 220 / polymeric liner 222 three-layer structure is typically obtained by applying a solution comprising a polymer (or mixture of polymers) and a solvent on the inner surface 208 of the metal wall 202, and then applying a polymeric liner 222 based on the same polymer(s) on said solution, then by evaporating the solvent of the solution, whereby the polymer adhesive protection layer 220 is formed. Good adhesion is thus obtained between the metal wall 202, the polymer adhesive protection layer 220 and the polymeric liner 222.

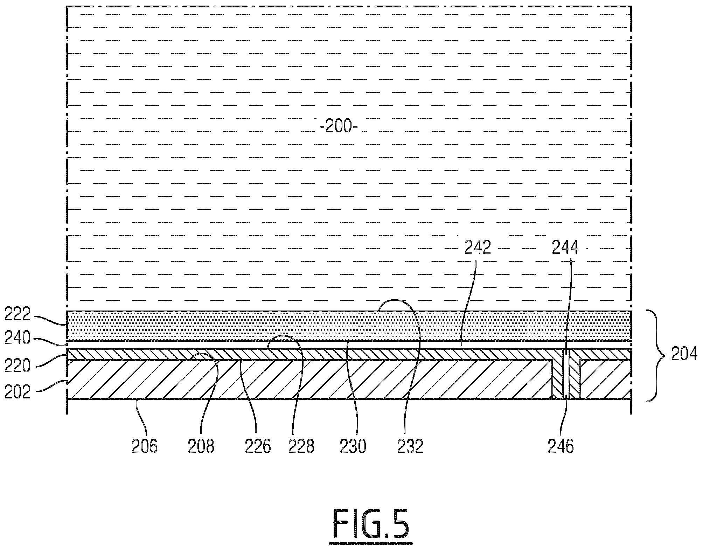

In another variant, shown in figure 5, the polymeric liner 222 and the polymer adhesive protection layer 220 are unbounded. In particular, there is no adhesive layer between them.

The polymeric liner 222 and the polymer adhesive protection layer 220 preferably define between them a drainage structure 240.

The drainage structure 240 comprises at least one channel 242.

The at least one channel 242 is defined in at least one of the polymeric liner 222, and/or the polymer adhesive protection layer 220 and/or an intermediate bonding layer 224 (not shown) interposed between the polymeric liner and the polymer adhesive protection layer 220.

The at least one channel 242 is preferably formed by making at least a groove in least one of the polymeric liner 222, and/or the polymer adhesive protection layer 220 and/or of the intermediate binding layer 224 (not shown). In the case of a pipe, the groove is for example straight and/or helical with an axis corresponding to the pipe axis.

A reinforcement, such as a grid or a spring or any compatible material/shape with permeated gases, may be inserted in or around the at least one channel 242 to maintain the flow through the at least one channel 42, for example under pressure of the electrolyte on the polymeric liner 222 to avoid any creep from the polymer layer(s) constituting the groove.

The drainage structure 240 optionally comprises at least one collection zone 244, the at least one channel 242 emerging in the collection zone 244. The collection zone 244 is for example an annular groove.

The drainage structure 240 comprising at least a through passage 246 defined through the metal wall 202. The at least one through passage 246 is fluidly connected to the at least one channel 242, preferably via the collection zone 244. In that case, the through passage 246 emerges inwardly in the collection zone 244.

A water electrolysis process according to the invention will now be described.

Electrolyte is provided to the inlet of the electrochemical stack device 20 through the fluid distributor 27. The electrolyte comprises recycled electrolyte from the two separators 49, 60 provided by the first and second electrolyte recycle pipes 52, 66 and the upstream recycled electrolyte supply pipe 39.

The electrolyte also advantageously comprises fresh water provided by the water source 14 and/or fresh electrolyte supplied from the tank 44.

The electrolyte is conducted through the common upstream cathodic and anodic feeds 27A, 27D and then to the individual downstream cathodic and anodic feeds 27B, 27C to feed respectively the cathodic compartments 19A and the anodic compartments 19B of each electrolyzer cell 19.

An electrical current is simultaneously supplied to the electrochemical stack device 20 and electrochemical reactions, as described above, occur within the stacks of cells of the electrochemical stack device 20 to convert the electrolyte within the electrolyte within the cathodic compartments 19A (also referred to as "catholyte") and in the anodic compartments 19B (also referred to as "anolyte") to respective outcoming fluids 28A, 28B.

The outcoming fluids 28A, 28B from the electrochemical stack device 20 are respectively dihydrogen mixed with electrolyte arising from the cathodic compartments 19A and dioxygen mixed with electrolyte arising from the anodic compartments 19B.

The outcoming fluid 28A is conducted to the dihydrogen separator 49 through the outcoming fluid recovery pipe 49A. In the dihydrogen separator, dihydrogen in gas phase is separated from electrolyte to be recycled.

A dihydrogen stream is recovered from the dihydrogen separator 49 in the dihydrogen recovery pipe 50 and is transported to the purification stage 29 for further treatment and/or use.

The recycled electrolyte is then conveyed via the first electrolyte recycle pipe 52 to the tapping 40. The recycled electrolyte in the first electrolyte recycle pipe 52 has a reduced dihydrogen content in comparison with the outcoming fluid 28A. It is still saturated in dihydrogen.

Similarly, the outcoming fluid 28B is conducted to the dioxygen separator 60 through the outcoming fluid recovery pipe 62. In the dioxygen separator 60, dioxygen in gas phase is separated from electrolyte to be recycled.

A dioxygen stream is recovered from the dioxygen separator 60 in the dioxygen recovery pipe 64 and is advantageously transported to the dioxygen 18 purification stage 30 for further treatment and/or use, or to a vent.

The recycled electrolyte is then conveyed via the second electrolyte recycle pipe 66 to the tapping 40. The recycled electrolyte in the second electrolyte recycle pipe 66 has a reduced dioxygen content in comparison with the outcoming fluid 28B. It is still saturated in dioxygen.

The electrolyte stored and/or transported in the electrolyte storage or/and circulation volume 200 of the water electrolysis installation 10 has a temperature greater than 40°C, in particular greater than 50°C and generally comprised between 50°C and 98 °C.

It has a pressure greater than 10 bara, in particular greater than 15 bara and generally comprised between 15 bara and 120 bara

The metal walls 202 are very efficiently protected from corrosion and electric charge transfer by interposing the polymeric protective structure 204 containing at least the polymer adhesive protection layer 220 and the polymeric liner 222 between the alkaline liquid electrolyte and the metal walls 202. The different pieces of equipment are thus less subject to corrosion. The release of ions, e.g. in the form of insoluble metal oxides is thus prevented or greatly decreased, limiting the degradation of the electrolyte. The same electrolyte can thus be used for a longer time, and sludge accumulation is prevented, reducing operational costs.

This beneficial effect is obtained with low capital expenditures as the polymers forming the layers of the polymeric protective structure 204 are cheaper and more efficient than a potential metallization, in particular with Nickel.

## Claims

1. A water electrolysis installation (10), comprising at least a piece of equipment delimiting an electrolyte storage or/and circulation volume (200), the piece of equipment comprising a metal wall (202) having an inner surface (208) facing the electrolyte storage or/and circulation volume (200),
**characterized in that** the piece of equipment further comprises:
- a polymer adhesive protection layer (220) applied on the inner surface (208) of the metal wall (202) ;
- a polymeric liner (222) positioned between the polymer adhesive protection layer (220) and the electrolyte storage or/and circulation volume (200), the polymeric liner (222) having an electrolyte contact surface (232) delimiting the electrolyte storage or/and circulation volume (200).

2. The water electrolysis installation (10) according to claim 1, wherein the polymeric liner (222) has a thickness greater than the polymer adhesive protection layer (220).

3. The water electrolysis installation (10) according to claim 1 or 2, wherein the polymer adhesive protection layer (220) is bound to the inner surface of the metal wall (202) chemically , mechanically or a combination of both .

4. The water electrolysis installation (10) according to any one of the preceding claims, wherein the polymer adhesive protection layer (220) comprises a polymer chosen from epoxy resin, acrylic or acrylate resin, polyurethane, polyester, vinylic resin, phenolic resin and mixtures thereof, or a polymer which is the same as the polymer of the polymeric liner (222).

5. The water electrolysis installation (10) according to any one of the preceding claims, wherein the polymeric liner (222) comprises a polymer chosen among thermoplastic polymers, elastomers and mixtures thereof.

6. The water electrolysis installation (10) according to claim 5, wherein the polymeric liner (222) comprises a polymer chosen among:
- a thermoplastic polymer chosen among fluorinated polymers, polysulfones, polyphenylene sulfide (PPS), polyether ether ketone (PEEK), copolymers thereof, and/or mixtures thereof,
- an elastomer chosen among FKM or FFKM as defined in standard ASTM D1418-22, tetrafluoro ethylene/propylene rubbers (FEPM) and mixtures thereof,
- and mixtures thereof.

7. The water electrolysis installation (10) according to any one of the preceding claims, wherein an outer surface (230) of the polymeric liner (222) is bound to an inner surface (228) of the polymer adhesive protection layer (220).

8. The water electrolysis installation (10) according to claim 7, wherein the bonding between the outer surface (230) of the polymeric liner (222) and the inner surface (228) of the polymer adhesive protection layer (220) is obtained at least partly by surface treatment of at least one the outer surface (230) of the polymeric liner (222) and of the inner surface (228) of the polymer adhesive protection layer (220), the surface treatment advantageously comprising at least one of a mechanical etching, such as abrasion, a chemical etching, and a plasma treatment.

9. The water electrolysis installation (10) according to any one of claims 1 to 6, wherein the piece of equipment further comprises at least an intermediate binding layer (224) connecting an outer surface (230) of the polymeric liner (222) to an inner surface (228) of the polymer adhesive protection layer (220).

10. The water electrolysis installation (10) according to claim 9, wherein the at least one intermediate binding layer (224) comprises a polymer chosen from epoxy resin, acrylic or acrylate resin, polyurethane, polyester, vinylic resin, phenolic resin, silane based resins and mixtures thereof, or a polymer which is the same as the polymer of the polymeric liner (222).

11. The water electrolysis installation (10) according to any one of claims 1 to 6, wherein the polymeric liner (222) and the polymer adhesive protection layer (220) are unbounded, the polymeric liner (222) and the polymer adhesive protection layer (220) preferably defining between them a drainage structure (240).

12. The water electrolysis installation (10) according to claim 11, wherein the drainage structure (240) comprises at least one channel (242), being defined in at least one of the polymeric liner (222), the polymer adhesive protection layer (220) the drainage structure (240) optionally comprising at least one collection zone (244), the at least one channel (242) emerging in the collection zone (244), the drainage structure (240) comprising at least a through passage (246) defined through the metal wall (202), the at least one through passage (246) being fluidly connected to the collection zone (244).

13. The water electrolysis installation (10) according to any one of the preceding claims, wherein the metal of the metal wall (202) is steel, preferably stainless steel or carbon steel, most preferably carbon steel, in particular carbon steel grades P265GH, P355GH or P355NH.

14. The water electrolysis installation (10) according to any one of the preceding claims, comprising:
- at least an electrolyzer stack device (20) comprising at least a cell (19) having an anodic compartment (19B) containing an anode, a cathodic compartment (19A) containing a cathode and a separator (19C) separating the anodic compartment (19B) and the cathodic compartment (19A);
- an electric current supply to the anode and the cathode of the or each cell (19) to electrolyze water within each cell (19), and produce dioxygen in the anodic compartment (19B) and dihydrogen in the cathodic compartment (19A);
- a dioxygen containing electrolyte recovery pipe (62) to recover a mixture of electrolyte and dioxygen from the or each anodic compartment (19B) and a dioxygen separator (60) to separate the mixture of electrolyte and dioxygen and to obtain an dioxygen stream and a first electrolyte stream;
- a dihydrogen containing electrolyte recovery pipe (49A) to recover a mixture of electrolyte and dihydrogen from the or each cathodic compartment (19A) and a dihydrogen separator (60) to separate the mixture of electrolyte and dihydrogen and to obtain a dihydrogen stream and a second electrolyte stream;
- at least a recycle pipe (52, 66) recirculating the first electrolyte stream and the second electrolyte stream to form at least part of the electrolyte containing water introduced in the electrolyzer stack device (20), the piece of equipment being at least one of a separator, a tank, a pipe, a pipe fitting, a pipe bend, a distributor, a manifold, a thermal exchanger, a stack casing, a valve, a pump, an instrument, defining the electrolyte storage or/and circulation volume (200).

15. The water electrolysis installation (10) according to any one of the preceding claims, wherein the electrolyte storage or/and circulation volume (200) contains an electrolyte, in particular an alkaline electrolyte, preferably an electrolyte containing an alkali metal hydroxide such as potassium hydroxide.

16. Use of a piece of equipment to store and/or transport electrolyte in a water electrolysis installation (10), the piece of equipment delimiting an electrolyte storage or/and circulation volume (200), and comprising a metal wall (202) having an inner surface facing the electrolyte storage or/and circulation volume (200), the piece of equipment further comprising:
- a polymer adhesive protection layer (220) applied on the inner surface (208) of the metal wall (202) ;
- a polymeric liner (222) positioned between the polymer adhesive protection layer (220) and the electrolyte storage or/and circulation volume (200), the polymeric liner (222) having an electrolyte contact surface (232) delimiting the electrolyte storage or/and circulation volume (200).

17. Use of a piece of equipment according to claim 16, wherein the electrolyte is pressurized at an electrolyte pressure above the atmospheric pressure in the electrolyte storage or/and circulation volume (200), the electrolyte pressure being advantageously greater than 10 bara and generally comprised between 15 bara and 120 bara.
